# EUROPEAN PATENT APPLICATION

(11) **EP 0 937 928 A1**
(43) Date of publication of application: **25.08.1999**
(21) Application number: 99101786.4
(22) Date of filing: 15.02.1999
(51) Int. Cl.: F16K 31/04, F16K 31/08

(54) **Electric motor-operated flow control valve**

(30) Priority: 23.02.1998 IT PD980036
(71) Applicant: ERRENNEGI S.r.l., 35020 Brugine (Prov. of Padova) (IT)
(72) Inventor: Nalini, Luigi, 35100 Padova (IT)
(74) Representative: Modiano, Guido, Dr.-Ing.

(57) **Abstract**

An electric motor-operated flow control valve (10), particularly for refrigeration fluids, having a valve body (14) with intake (15) and discharge (16) ports and a movable plug element (17), and a motor section (11) for actuating and adjusting the movable plug element (17). The rotor part (13) of the motor of the valve (10) is supported rotatably in a hermetic capsule (19) which is fixed to the valve body (14), is axially fixed, and is coupled with a screw-and-nut coupling to the movable plug element (17), which plug element (17) is further constrained by the valve body (14) to perform only axial translatory motions.

## Description

The present invention relates to an electric motor-operated flow control valve for fluids, particularly refrigeration fluids.

Expansion valves are currently commonly used in compression-based refrigeration circuits.

In particular, two-way valves are used to control the flow of the refrigeration fluid by means of an opening and of a movable control element which is preferably actuated by means of an electric motor.

These valves based on thermostatic expansion are meant to control the flow of the circulating refrigeration fluid.

In particular, they are actuated by the motor unit under the control of a sensor which is sensitive to the overheating of said refrigeration fluid at the outlet of the evaporator with respect to the saturated evaporation temperature which ensures the complete transition of the refrigeration fluid to the gaseous state before it is aspirated by the compressor.

Two basic types of the above valves are currently commercially available.

A first type has a valve body with an inlet coupling and an outlet coupling which is provided with an actuation system for the movable control element which is constituted by a diaphragm which is coupled to an elastic contrast spring.

The diaphragm is in turn actuated by the pressurized fluid which is introduced, by means of branches, into a plenum chamber in which said diaphragm is contained.

For purely constructive reasons, the stroke of the diaphragm in these self-actuated valves is generally very modest and therefore the flow control action must be achieved by means of an equally modest stroke of the movable control element.

A consequence of this is the fact that, considering the mechanical hystereses which are typical for the structure, it is difficult for said valves to provide fine and gradual modulation of the laminar flow of the refrigeration fluid, particularly in the case of low flow-rates or with very modest overheating values (which generate driving signals of modest amplitude).

In these conditions, even small movements of the movable control element in fact induce intense disturbances in the system, which accordingly tends to operate unstably with the well-known phenomenon termed "hunting".

In order to eliminate these drawbacks, valves have been provided which fall into a second category and provide for an actuation which is constituted by an electric motor preferably of the stepping type.

In these valves, the activation of the motor in fact produces a rotary motion of the movable control element, which is coupled thereto by a screw-and-nut coupling.

However, although these valves solve the problems related to fine adjustment, they are not free from drawbacks.

In particular, a first drawback is their considerable constructive complexity, with consequent high costs, due to difficulties in inserting the entire motor in a hermetic enclosure, which is in any case necessary to prevent the leakage of refrigeration fluid into the atmosphere.

A constructive variation of this second type encloses only the rotor part of the electric motor and provides a screw-and-nut coupling between the valve body and the stem of the movable control element.

In this case also, however, there are two considerable drawbacks.

The first of these drawbacks is due to the fact that during adjustment the rotor of the stepping motor moves with respect to the stator, whose position is fixed, and this negatively affects the performance of said motor, especially in the stroke limit positions.

A second drawback is the fact that during closure the movable control element engages the seat of the opening to be closed or opened with a rotary motion which tends to wear the materials involved.

It should also be observed that in order to achieve fine adjustment the thread of the screw has a small angle and at the stroke limit this rotary motion can even jam the movable control element against the edges of the opening.

The aim of the present invention is to provide an electric motor-operated expansion valve for refrigeration fluids which solves the above mentioned drawbacks of conventional valves, particularly achieving a fine adjustment of the degree of closure without however triggering the danger of damage or wear of the edges of the opening to be closed.

In relation to this aim, an important object of the present invention is to provide a valve in which the motor always operates at its maximum efficiency.

A further object of the present invention is to provide a valve which is constructively simple to manufacture, leading to a consequent reduction in production costs.

A further object of the present invention is to provide a valve which is particularly flexible in terms of application and can optionally be adapted even to already-installed refrigeration systems.

A further object of the present invention is to provide a valve which ensures to the fullest possible extent a hermetic seat with respect to the outside for the refrigeration fluids that flow through it.

A further object of the present invention is to provide a valve which can be manufactured with known technologies and means.

This aim, these objects and others which will become apparent hereinafter are achieved by an electric motor-operated expansion valve for refrigeration fluids, of the type comprising a valve body with intake and discharge ports and a movable plug element, and a motor section for actuating and adjusting the movable plug element, the rotor part of said motor of said valve being supported rotatably in a hermetic capsule which is fixed to said valve body, characterized in that the rotor part, which is axially fixed, is coupled with a screw-and-nut coupling to a part of said movable plug element, said movable plug element being constrained by said valve body to perform only axial translatory motions.

Further characteristics and advantages of the present invention will become apparent from the following detailed description of six embodiments thereof and of corresponding variations, all of which are illustrated only by way of non-limitative example in the accompanying drawings, wherein:
Figure 1 is a schematic sectional orthographic projection view of a valve according to the invention, in a first embodiment;
Figure 2 is a sectional orthographic projection view of a valve according to the invention, in a second embodiment;
Figure 3 is an exploded view of the valve of Figure 2;
Figure 4 is a sectional orthographic projection view of part of a valve according to the invention, in a third embodiment;
Figure 5 is a sectional orthographic projection view of part of a valve according to the invention, in a fourth embodiment;
Figure 6 is a partially sectional projection view of part of a valve according to the invention, in a fifth embodiment;
Figure 7 is a partially sectional orthographic projection view of a valve according to the invention, in a sixth embodiment;
Figure 8 is an exploded view of the valve of Figure 7;
Figure 8a is a view of an improvement of the valve of Figure 8;
Figure 9 is a partially sectional orthographic projection view of a valve according to the invention, in a seventh embodiment;
Figure 10 is an exploded view of the valve of Figure 9;
Figures 11 to 14 are sectional views of constructive variations of a same detail of a valve according to the invention;
Figures 15 and 16 are exploded axonometric views of another constructive variation of the invention;
Figures 17 to 20 are sectional orthographic projection views of another constructive variation of the invention;
Figures 21 and 22 are views of a same further variation of the invention.

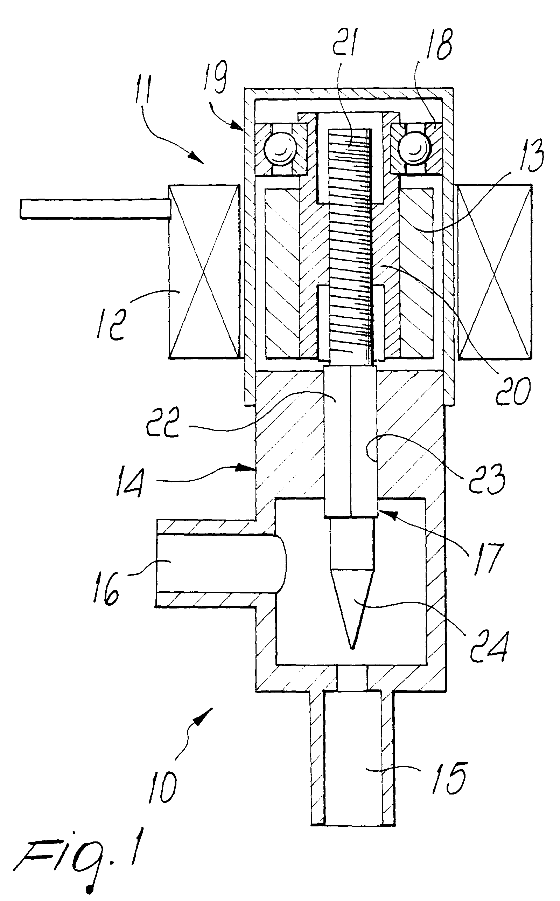

With particular reference to Figure 1, an expansion valve for refrigeration fluids, according to the invention, is generally designated by the reference numeral 10.

The valve 10 is operated by an electric motor, generally designated by the reference numeral 11, which is provided with a stator part 12 and with a rotor part 13.

In particular, the electric motor 11 is of the stepping type in this case.

The valve 10 comprises a valve body 14 with intake and discharge ports, designated by the reference numerals 15 and 16 respectively, and the stem of a movable plug element 17 which is actuated by the electric motor 11.

The rotor part of the motor 11 is supported so that it can rotate, in this case by means of a ball bearing 18 (or equivalent device) which rigidly couples it axially, in a hermetic cylindrical capsule 19 which is fixed, for example by welding or through other equivalent methods, to the valve body 14.

In particular, the rotor part 13 is coupled with a screw-and-nut coupling, by interposing a transmission element 20 which is substantially tubular in this case, to the threaded tang 21 of the stem of the movable plug element 17, which is also provided with a rotation-preventing section 22 which is prism-shaped in this case and is coupled to a complementarily shaped hole 23 which is formed in the valve body 14 and is adapted to force the stem of said movable plug element 17 to move only axially when it is actuated by the electric motor 11.

In this embodiment, the stem of the movable plug element 17 is conveniently provided with a conical plug end 24, but in other cases it may have different shapes (for example the shape of an ogive) in order to produce corresponding criteria of variation of the closed cross-section as a function of the axial position of the stem of said movable plug element 17.

The rotor part 13 also has a maximum diameter which is compatible with the capacity of the capsule 19 in order to minimize the gap.

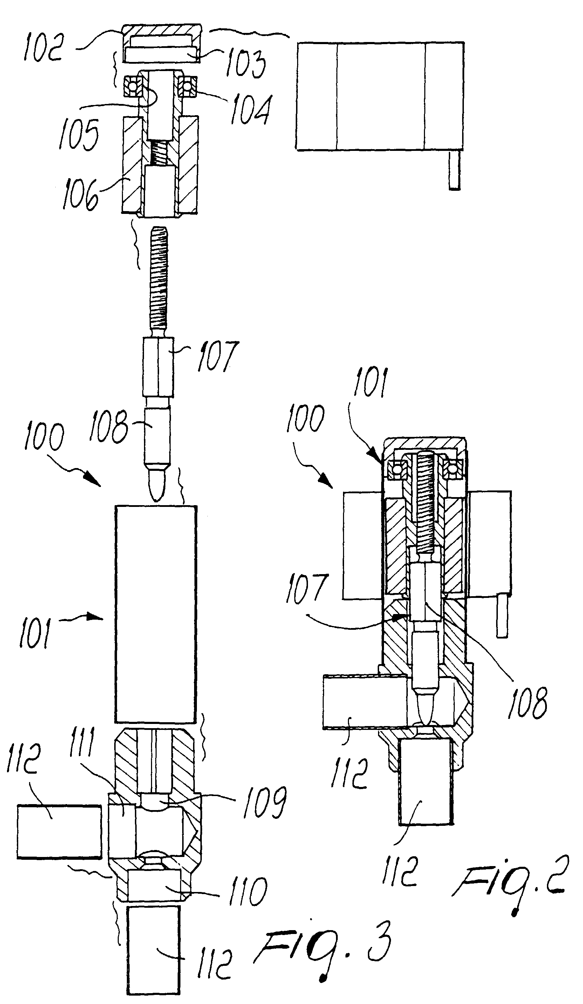

With particular reference to Figures 2 and 3, a valve according to the invention is generally designated by the reference numeral 100 in a second embodiment.

The valve 100 does not differ substantially from the valve 10, reference being made thereto for a description of the components.

However, in the valve 100 the sealing capsule, now designated by the reference numeral 101, is provided with a cover 102 which is shaped so as to form, at the internal surface, a seat 103 for the bearing 104 which is rigidly coupled to the transmission element 106 by coupling in an annular slot 105 formed in the transmission element, now designated by the reference numeral 106.

The stem of the movable plug element of the valve 100, now designated by the reference numeral 107, is also provided in this case with a gauged section 108 which also is coupled to a corresponding portion of the hole, now designated by the reference numeral 109, which is adapted to ensure the coaxiality of the movement.

Both the intake port 110 and the discharge port 111 are also coupled to corresponding welded pipe sections 112.

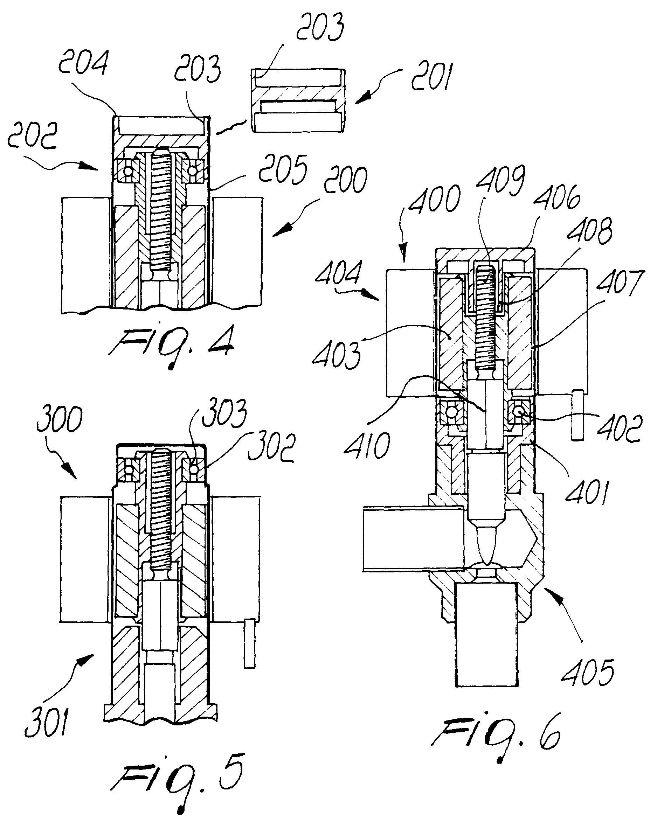

With particular reference to Figure 4, a valve according to the invention is generally designated by the reference numeral 200 in a third embodiment.

The valve 200 does not differ from the valve 100 except for the fact that in this case there is a cover 201 for closing the capsule 202 which is provided with an outer lip 203 which can be arranged so as to form a flap 204 for welding to the jacket 205 of said capsule 202.

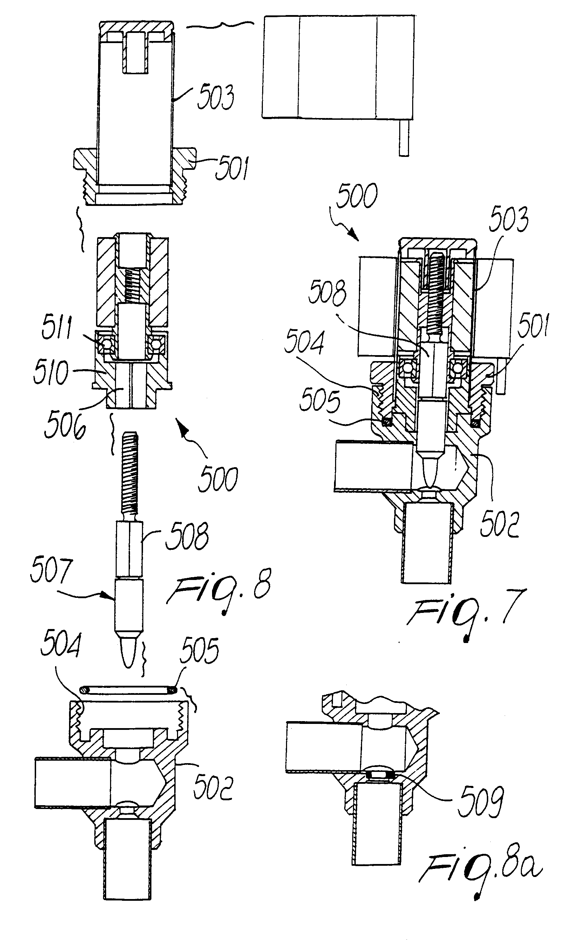

With particular reference to Figure 5, a valve according to the invention is generally designated by the reference numeral 300 in a fourth embodiment.

The valve 300 does not differ substantially from the valve 10, reference being made thereto for the description of the constructive details, except for the fact that the capsule, now designated by the reference numeral 301, is shaped, by reducing its cross-section, so as to form, at its outer end, a seat 302 for accommodating a supporting bearing, designated by the reference numeral 303 in this embodiment.

With particular reference to Figure 6, a valve according to the invention is generally designated by the reference numeral 400 in a fifth embodiment.

The valve 400 does not differ substantially from the valve 100 and from the other described embodiments, except for the fact that it is provided with a bush 401 for externally supporting the bearing, now designated by the reference numeral 402, which is arranged between the rotor part 403 of the electric motor 404 and the body 405.

The valve 400 is also provided with a closure cover 406 for the capsule, now designated by the reference numeral 407, which is shaped so as to form a cylindrical internal guide 408 for the end of the threaded tang 409 of the movable plug element 410.

With particular reference now to Figures 7 and 8, a valve according to the invention is generally designated by the reference numeral 500 in a sixth embodiment.

The valve 500 does not differ substantially from the above-described valve, except for the fact that it is provided, instead of the bush, with a threaded ring 501 for connection between the valve body 502 and the capsule 503, thus allowing to disassemble it.

In particular, the ring 501 is partially accommodated in, and connected to, a threaded seat 504 formed in the valve body 502, which also accommodates sealing means which in this case are constituted by an elastomer ring 505.

The ring 501 also accommodates a further bushing 510, housing the bearing 511, and which is provided with a shaped hole 506 coupling with the rotation-preventing section, now designated by the reference numeral 508, of the stem of the movable plug element, now designated by the reference numeral 507.

Figure 8a illustrates the possibility of providing the sealing seat with an applied and replaceable element 509.

The simultaneous replacement of the element 509 and of the stem of the movable plug element 507 allows to vary the adjustment characteristics of the valve even when it is already installed, in addition to allowing replacements for maintenance and in case of wear.

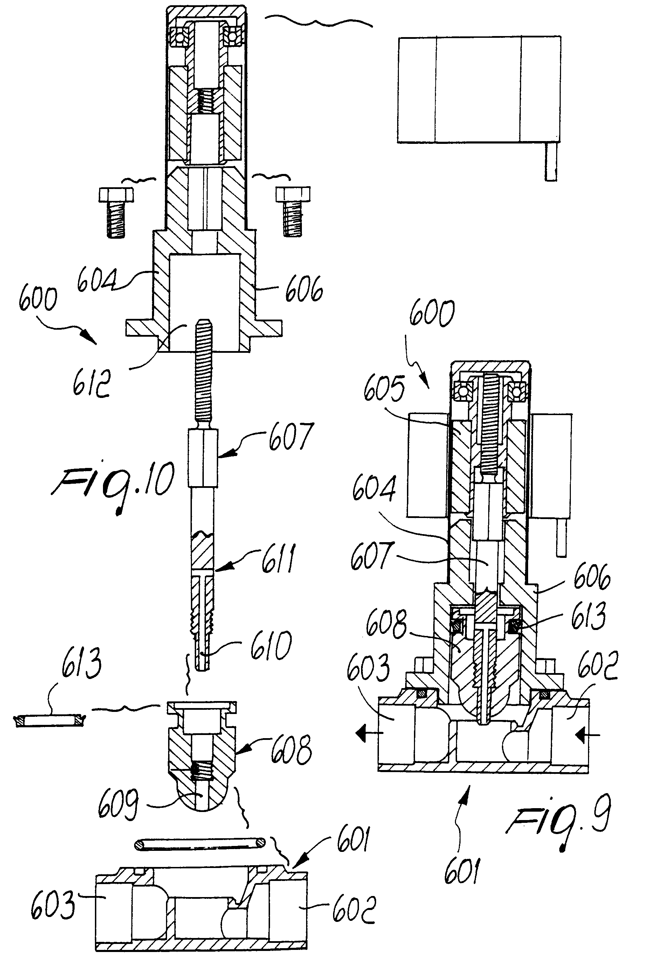

With particular reference to Figures 9 and 10, a valve according to the invention is generally designated by the reference numeral 600 in a seventh embodiment.

The valve 600 is provided, in this case, with a valve body 601 with an intake port 602 and with a discharge port 603 which are mutually coaxial.

The valve body 601 is also connected to a capsule 604 for containing the rotor part 605 by means of a bush 606 which is crossed by a stem 607.

Reference is made to the preceding description as regards the description of the components for actuating the stem 607.

At its end, the stem 607 is coupled to a piston 608 which acts both as movable plug element and equalization piston; its upper face (with respect to the drawing) is at the same pressure as the closure region.

This is achieved by means of a through hole 609 in the piston 608, which continues into an axial hole 610 which is provided in the stem 607 with openings 611 which lead into the chamber 612.

The seal of the piston 608 with respect to the chamber 612 is achieved by means of a gasket 613.

This configuration allows to drive valves having a considerable cross-section with a low-power motor.

The possibility to provide the rotation-preventing means 22a-d, 23a-d of the stem of the movable plug element 17 according to different kinds of cross-section, to be chosen according to the intended functions and to the specific production requirements, is illustrated in Figures 11 to 14.

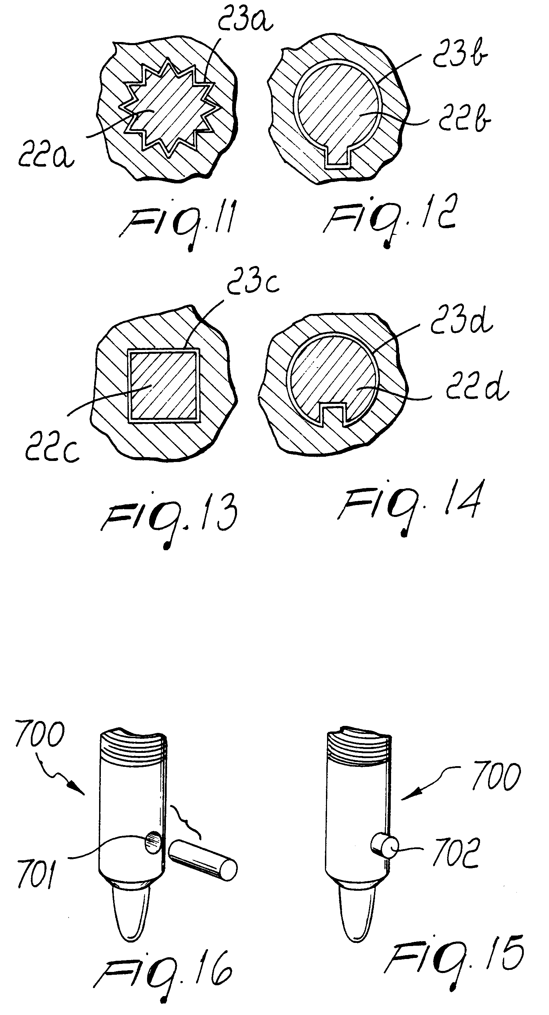

A constructive variation of the stem of the movable plug element, now generally designated by the reference numeral 700, is described with particular reference to Figures 15 and 16; in said variation, the stem of the movable plug element 700 has a radial hole 701 in which a partially protruding rotation-preventing pin 702 is inserted; the protruding part of said pin is inserted in a corresponding cavity or recess, not shown, which is formed in the valve body or in any one of the connection and interposition elements earlier described.

This constructive solution allows to greatly simplify the construction of the stem of the movable plug element, which in this case is cylindrical and has a constant cross-section.

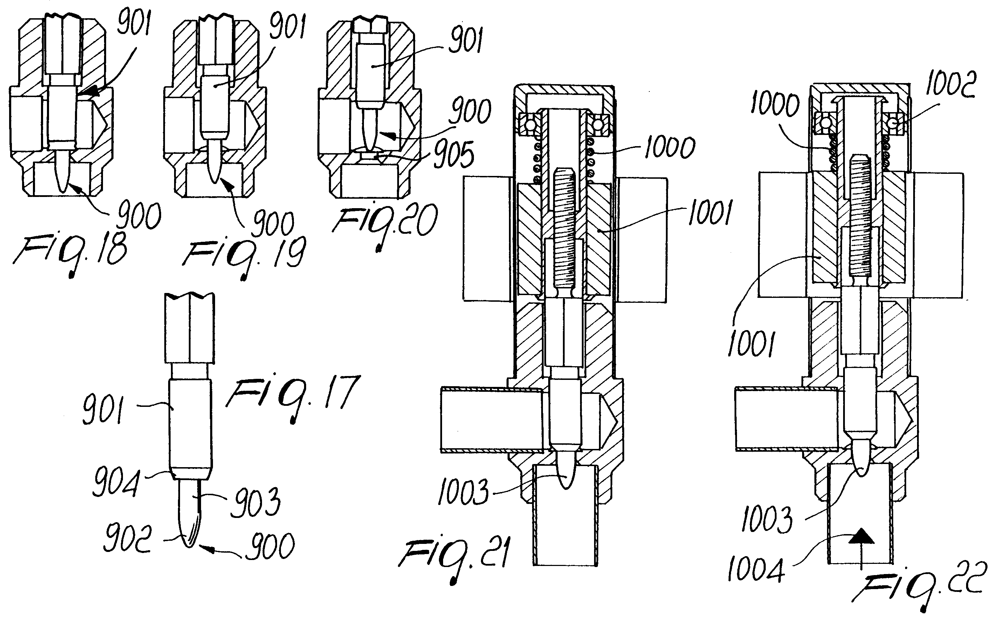

A further constructive variation is described with particular reference to Figures 17 to 20; in this variation, the plug end 900 of the movable plug element, now designated by the reference numeral 901, is divided into two sections: a first adjustment section, designated by the reference numeral 902, and a second spacing section 903, which allows the separation of the part 902 of the movable plug element 901 meant for adjustment from the spacing part 903 meant to close the intake port by means of a gasket 904.

This configuration ensures the perfect tightness of the valve when closed by means of two functional steps.

The first step, for adjustment, is achieved by positioning the movable plug element 901 in the port 905; the second step, for closure, is obtained by producing the forced advancement of the gasket 904 against the edge of the port 905.

With particular reference to Figures 21 and 22, said figures illustrate another constructive variation, in which an elastic contrast and connection element is inserted; said element is constituted in this case by a helical spring 1000 which is arranged between the rotor part, now designated by the reference numeral 1001, and the supporting bearing, now designated by the reference numeral 1002, for discharging any overpressures due to water hammering in the system.

Figure 21 shows in particular the normal closure condition, while Figure 22 is a view of the lifting of the movable plug element 1003 and of the consequent compression of the spring 1000 as a consequence of an overpressure, represented by the arrow 1004.

In practice it has been observed that the present invention has achieved the intended aim and objects.

In particular, it should be noted that the purely axial movement of the movable control element avoids all wear or jamming thereof at the edges for closing the intake port, where the flow of the refrigerating fluid is adjusted.

It should also be noted that the axial position of the rotor part remains unchanged with respect to the stator part, so that the electric motor as a whole always operates with maximum efficiency and to the fullest extent of its possibilities.

Attention is also drawn to the constructive simplicity of the structure of the valve according to the invention, which allows low production costs but at the same time ensures great overall functional validity.

Attention is also drawn to the versatility in use of the valve according to the invention, which can also be advantageously coupled to accessories which prevent damage thereto in case of sudden overpressures.

The present invention is susceptible of numerous modifications and variations, all of which are within the scope of the same inventive concept.

The constructive details may be provided and replaced with other technically equivalent details.

The materials and the dimensions may be any according to requirements.

The disclosures in Italian Patent Application No. PD98A000036 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electric motor-operated flow control valve (10,100,300,400,500,600) for fluids, particularly refrigeration fluids, of the type comprising a valve body (14,405,502,601) with intake (15,110,602) and discharge (16,111,603) ports and a movable plug element (17,410,507,608,700,901,1003), and a motor section (11,404) for actuating and adjusting the movable plug element, the rotor part (13,605,1001) of said motor of said valve (10,100,300,400,500,600) being supported rotatably in a hermetic capsule (19,101,202,301,407,503,604) which is fixed to said valve body, characterized in that the rotor part (13,605,1001), which is axially fixed, is coupled with a screw-and-nut coupling (20,21) to a part of said movable plug element (17,410,507,608,700,901,1003), said movable plug element being constrained by said valve body (14,405,502,601) to perform only axial translatory motions.

2. The valve according to claim 1, characterized in that said rotor part (13) of said motor is rotatably supported by means of at least one bearing (18) which axially rigidly couple it within said hermetic capsule (19).

3. The valve according to claim 1, characterized in that said rotor part (13) is coupled to said movable plug element (17) by interposing a transmission element (20).

4. The valve according to claim 1, characterized in that said movable plug element (17) is constituted by a stem with a threaded tang (21), a rotation-preventing middle portion (22) and a shaped plug end (24,1003).

5. The valve according to claim 4, characterized in that said plug end (1003) has an ogive-like shape.

6. The valve according to one or more of the preceding claims, characterized in that the stem (107) of said movable plug element comprises a gauged alignment section (108) which is inserted, on assembly, in a portion of the sliding hole (109) for said stem (107) of said movable plug element.

7. The valve according to one or more of the preceding claims, characterized in that said rotation-preventing portion (22,22a,22c) of said stem is prism-shaped.

8. The valve according to one or more of the preceding claims, characterized in that said capsule (101) is provided with a cover (102) which is shaped so as to form the outer part of a seat (103) for the supporting bearing (104), which is internally completed by an annular slot (105) formed in said transmission element (106).

9. The valve according to one or more of the preceding claims, characterized in that said cover (201) can be provided with an outer lip (203) which is arranged so as to form a flap (204) for welding to the jacket (205) of said capsule (202).

10. The valve according to claim 1, characterized in that said capsule (301) is formed monolithically.

11. The valve according to claims 1 and 2, characterized in that said capsule (301) has an outer end which is shaped so as to form a seat (302) for said bearing.

12. The valve according to claim 1, characterized in that it comprises a bush (401) for externally supporting said bearing (402) which is arranged between said rotor part (403) and said valve body (405).

13. The valve according to claims 1 and 3, characterized in that said capsule (407) comprises a cover (406) which is shaped so as to form an internal cylindrical guide (408) for the end of said threaded tang (409) of said movable plug element (410).

14. The valve according to any of the claims 1-4, characterized in that it comprises a threaded ring (501) for connection between said valve body (502) and said capsule (503) which allows its disassembly.

15. The valve according to claim 14, characterized in that the rotor assembly is accommodated inside said capsule (503).

16. The valve according to claim 14, characterized in that said ring (501) is accommodated in, and coupled to, a threaded seat (504) formed in said valve body (502).

17. The valve according to claim 16, characterized in that sealing means, constituted by at least one elastomer ring (505), are also accommodated in said seat (504).

18. The valve according to claim 14, characterized in that it comprises a bushing element (510) which acts as bearing support for said bearing (511) and as device for preventing the rotation of the stem.

19. The valve according to one or more of the preceding claims, characterized in that a replaceable element (509) is accommodated in said valve body (502) at the intake port.

20. The valve according to one or more of the preceding claims, characterized in that the plug end (900) of said movable plug element (901) has an adjustment section (902) and is separately provided with a sealing means (904) of a passive spacing portion (903).

21. The valve according to claim 1, characterized in that said movable plug element is coupled to an equalization piston (608) which is constituted by a body which moves within a cylindrical chamber (612), said body having an ogive-shaped adjustment portion and being associated with the stem (607) of the movable plug element, an axial hole (609,610) being provided which passes through both said piston body and a consecutive part of the stem and leads into said cylindrical chamber (612), thus equalizing the pressure on the two opposite ends of said piston body.

22. The valve according to one or more of the preceding claims, characterized in that in a simplified version the stem of said movable plug element (700) is associated with a protruding pin (702) which is adapted to provide the rotation-preventing device and is coupled to a corresponding slot formed in said valve body or in an element for interposition therewith, so that the stem of the movable plug element can be cylindrical and can have a constant cross-section.

23. The valve according to one or more of the preceding claims, characterized in that an elastic element, for example a spring (1000), is interposed between the rotor (1001) and the bearing (1002) and allows the movable plug element (1003) to move axially away from the intake port when it is in the closure position in case of overpressure and/or fluid hammering.
